(19) Europäisches Patentamt
European Patent Office
Office européen des brevets

(11) **EP 3 325 284 B1**

(12) **FASCICULE DE BREVET EUROPEEN**

(45) Date de publication et mention de la délivrance du brevet:
**13.05.2020 Bulletin 2020/20**

(21) Numéro de dépôt: **16742241.9**

(22) Date de dépôt: **19.07.2016**

(51) Int Cl.:
**B60C 11/03** *(2006.01)*     **B60C 11/12** *(2006.01)*

(86) Numéro de dépôt international:
**PCT/EP2016/067171**

(87) Numéro de publication internationale:
**WO 2017/016931 (02.02.2017 Gazette 2017/05)**

(54) **BANDE DE ROULEMENT POUR PNEU DE POIDS LOURD AMELIORANT LE BRUIT EN ROULAGE**

LAUFFLÄCHE EINES SCHWERLASTFAHRZEUGREIFENS MIT VERBESSERTEM LAUFGERÄUSCH

HEAVY VEHICLE TYRE TREAD WITH IMPROVEMENT TO RUNNING NOISE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.07.2015 FR 1557039**

(43) Date de publication de la demande:
**30.05.2018 Bulletin 2018/22**

(73) Titulaire: **Compagnie Générale des Etablissements Michelin**
**63000 Clermont-Ferrand (FR)**

(72) Inventeur: **DAYET, Patrick**
**63040 Clermont-Ferrand Cedex 9 (FR)**

(74) Mandataire: **Le Cam, Stéphane Georges Elie**
**Manufacture Française des Pneumatiques Michelin**
**CBS/CORP/J/PI - F35 - Ladoux**
**23, place des Carmes-Déchaux**
**63040 Clermont-Ferrand Cedex 9 (FR)**

(56) Documents cités:
**EP-A2- 1 935 671     FR-A1- 3 014 022**

## Description

*DOMAINE DE L'INVENTION*

L'invention concerne les bandes de roulement pour pneus de véhicules poids lourd et plus particulièrement les dessins de sculpture de ces bandes ainsi que les pneus pourvus de telles bandes dont les performances en bruit émis pendant le roulage sont améliorées tout en conservant un haut niveau de performances d'adhérence par temps de pluie.

*ÉTAT DE LA TECHNIQUE*

De façon connue, un pneu pour véhicule poids lourd est pourvu d'une bande de roulement assurant par sa surface de roulement un contact en roulage avec la chaussée. Cette même bande de roulement doit conférer au véhicule des performances d'adhérence indispensables à la sécurité de la circulation que ce soit par temps sec ou pluvieux voire sur chaussée revêtue de neige.

Afin d'augmenter ces performances de tenue de route et de tenue de cap quelles que soient les conditions de roulage, il est connu de pourvoir la surface de roulement de la bande de roulement avec un dessin de sculpture. Ce dessin de sculpture outre un aspect esthétique comprend un aspect technique et est en règle générale formé d'une pluralité de découpures réalisées pendant le moulage de la bande de roulement ou bien pendant le moulage du pneu. Par découpure, on entend ici tout type de cavité pouvant prendre la forme d'une rainure, d'une incision, ou plus généralement tout type de creux générant des arêtes et un volume disponible pour capter l'eau éventuellement présente sur la chaussée par temps de pluie.

Lors du roulage d'un pneu sur une chaussée, les éléments de la bande de roulement viennent en contact avec ladite chaussée et génèrent, du fait de cette mise en contact répétitive, un bruit de roulage qui peut se décomposer en plusieurs harmoniques, certaines d'entre elles étant une fonction directe du dessin de la sculpture de la bande.

Par dessin de la sculpture d'une bande de roulement, on entend ici l'agencement des éléments de reliefs (tels les blocs et les nervures) de matière délimités par des rainures et formant des motifs répétitifs au tour de roue.

Afin de limiter le bruit en roulage, il est connu, notamment pour les pneus destinés à des véhicules de tourisme, de faire varier au tour de roue la longueur des motifs de base du dessin de sculpture ; cette technique dite du pas variable (multi-pas) consiste à employer en séquence une succession de motifs de différentes longueur circonférentielle.

Dans le domaine du pneu pour poids lourd cette technique est moins employée et en général on a affaire à des dessins de sculpture mono-pas pour lequel le bruit est caractérisé par les harmoniques liées au dessin de la sculpture.

L'objectif de l'invention est de réduire l'amplitude des harmoniques en réduisant l'amplitude de l'excitation liée au dessin de la sculpture c'est à dire aux phénomènes de mise en contact entre les éléments de relief et la chaussée sur laquelle roule le pneu.

Le bruit émis par un pneu de poids lourd se caractérise par une puissance mécanique d'excitation transmise au pneu par l'impact des éléments de la sculpture lors de leur passage dans le contact avec la chaussée.

De manière très simplifiée, les mécanismes mis en jeu lors de l'entrée dans le contact du bord d'attaque d'un élément de sculpture et le temps pendant lequel cet événement se déroule peuvent être représentés sous l'allure du spectre d'un signal ou d'une impulsion rectangulaire unique de période T et de largeur de créneau aT, cette largeur de créneau représentant le temps de mise en contact de la totalité d'une arête d'attaque d'un élément de relief de la bande.

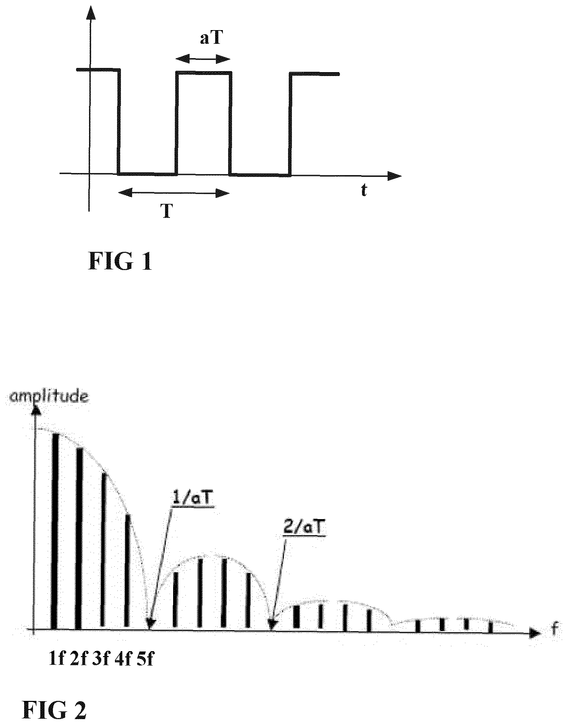

Les représentations temporelles et fréquentielles d'un tel signal sont montrées de façon schématique avec les figures 1A et 1B du présent document.

Définitions :

Plan médian équatorial d'un pneu : c'est un plan perpendiculaire à l'axe de rotation du pneu et passant par les points du pneu radialement les plus éloignés dudit axe.

Par direction radiale, on entend dans le présent document une direction qui est perpendiculaire à l'axe de rotation du pneu (cette direction correspond à la direction de l'épaisseur de la bande de roulement).

Par direction transversale ou axiale, on entend une direction parallèle à l'axe de rotation du pneu.

Par direction circonférentielle, on entend une direction qui est tangente à tout cercle centré sur l'axe de rotation. Cette direction est perpendiculaire à la fois à la direction axiale et à une direction radiale.

L'épaisseur totale d'une bande de roulement est mesurée, sur le plan équatorial du pneu pourvu de cette bande, entre la surface de roulement et la partie radialement la plus à l'extérieur de l'armature de sommet à l'état neuf.

Une bande de roulement a une épaisseur maximale de matière à user en roulage, cette épaisseur maximale de matière à user étant inférieure à l'épaisseur totale de la bande.

Les conditions usuelles de roulage du pneu ou conditions d'utilisation sont celles qui sont définies par la norme E.T.R.T.O. pour des roulages européens ; ces conditions d'utilisation précisent la pression de gonflage de référence correspondant à la capacité de charge du pneu indiquée par son indice de charge et son code vitesse. Ces conditions d'utilisation peuvent aussi être dites "conditions nominales" ou "conditions d'usage".

Une découpure désigne de manière générique soit une rainure soit une incision et correspond à l'espace délimité par des parois de matière se faisant face et distantes l'une de l'autre d'une distance non nulle (dite "largeur de la découpure"). Ce qui différencie une incision d'une rainure c'est précisément cette distance ; dans le cas d'une incision, cette distance est appropriée pour permettre la mise en contact au moins partielle des parois opposées délimitant ladite incision au moins lors du passage dans le contact avec la chaussée. Dans le cas d'une rainure, les parois de cette rainure ne peuvent venir en contact l'une contre l'autre dans les conditions usuelles de roulage telles que définies par exemple par l'E.T.R.T.O..

Il est fait référence aux documents suivants : FR 3014022 A1 et EP 1935671 A2 faisant partie de l'état de la technique.

*BREF EXPOSÉ DE L'INVENTION*

La présente invention concerne un dessin de sculpture d'une bande de roulement pour pneu de véhicule poids lourd qui améliore sensiblement le niveau de bruit en roulage tout en préservant de bonnes performances en usure et en adhérence cela quel que soit le niveau d'usure.

La bande de roulement selon l'invention comprend à l'état neuf une surface de roulement destinée à venir en contact avec une chaussée, cette bande de roulement ayant une largeur W.

Cette bande comprend en outre :

- un plan médian divisant la bande en deux moitiés d'égales largeurs,

- deux rainures principales d'orientation générale circonférentielle délimitant une région centrale de largeur comprise entre 15 et 25% de la largeur totale W de la bande, ces rainures principales d'orientation générale circonférentielle ayant une profondeur P définissant sensiblement l'épaisseur à user de la bande de roulement,

- des régions latérales de part et d'autre de la région centrale, chacune de ces régions latérales étant divisée en une pluralité d'éléments de relief allongés comprenant des grands côtés et des petits côtés, ces élément étant délimités par des rainures obliques s'ouvrant dans les rainures principales circonférentielles et inclinées selon un angle moyen compris entre 35 degrés et 55 degrés - cet angle étant mesuré par rapport à la direction circonférentielle.

La bande de roulement selon l'invention est caractérisée en ce que les rainures secondaires obliques ont une profondeur P5 comprise entre 30% et 60% de la profondeur P des rainures principales d'orientation générale circonférentielle et en ce que chaque élément de relief allongé des régions latérales comprend une découpure additionnelle oblique s'étendant parallèlement aux rainures obliques délimitant cet élément et divisant l'élément en deux moitiés allongées d'élément, chaque découpure additionnelle oblique s'ouvrant sur les petits côtés de l'élément, et en ce que chaque découpure additionnelle oblique a une profondeur totale au moins égale à 75% de la profondeur des rainures principales circonférentielles et est formée - en allant de la surface de roulement à neuf vers l'intérieur de la bande - par une incision prolongée par un canal interne destiné à former une nouvelle rainure après usure partielle de la bande de roulement au plus tard avant totale disparition des rainures secondaires obliques, ce canal interne ayant une largeur moyenne au moins égale à la largeur moyenne des rainures obliques, chaque rainure oblique et chaque découpure additionnelle oblique d'un élément de relief allongé se prolongeant dans la région centrale de la bande par une découpure oblique formée d'une incision se prolongeant dans l'épaisseur de la bande par un canal interne, cette découpure oblique formée dans la région centrale conservant la même orientation que les rainures obliques des régions latérales et cela jusqu'au plan médian.

Grâce à une bande de roulement selon l'invention, il est possible à la fois d'augmenter le temps de chaque impulsion aT d'entrée dans la région de contact des éléments de relief, et ainsi de diminuer la fréquence du signal d'amortissement, minimisant ainsi les fréquences qui lui sont supérieures tout en préservant de bonne performances en adhérence sur chaussées mouillées quel que soit le niveau de l'usure de la bande.

Le temps de l'impulsion est ici modifié grâce au choix d'une inclinaison des éléments de reliefs par rapport à la direction circonférentielle ce qui a pour effet d'augmenter la longueur de son bord d'attaque et donc son temps total de rentrée dans le contact avec la chaussée. Par bord ou arête d'attaque on entend l'arête d'un élément de relief rentrant la première dans le contact avec la chaussée pendant le roulage. A contrario le bord ou arête rentrant dans le contact après l'arête d'attaque est dite arête de fuite de l'élément.

Une telle orientation des éléments de relief confère à la bande de roulement une plus grande sensibilité à l'usure de type « dents de scie » laquelle est contrebalancée par une réduction de la hauteur des éléments de relief comparativement à la hauteur usuelle des éléments de relief des pneus pour poids lourd. Le fait notamment que les éléments allongés aient à neuf une hauteur limitée et inférieure à la hauteur de la région centrale permet de réduire l'incidence de l'inclinaison A choisie pour ces éléments sur l'usure.

Par ailleurs, la performance en adhérence sur chaussée revêtue d'eau est préservée grâce à la présence d'un dessin de sculpture évolutif avec l'usure lequel est apte à générer l'apparition de nouvelles rainures après une usure partielle.

L'invention permet de déplacer l'équilibre des performances en bruit de roulage, celle en adhérence sur chaussée revêtue d'eau et cela de manière pérenne puisque quel que soit le niveau d'usure le niveau d'adhérence est optimal.

Avantageusement et pour réduire encore le bruit de roulage, les rainures obliques d'une région latérale de la bande sont déphasées circonférentiellement par rapport aux rainures obliques de l'autre région latérale.

Dans une variante intéressante de l'invention les rainures obliques des parties latérales sont orientées de manière à générer un dessin de sculpture directionnel, c'est à dire conférant un sens de roulage préférentiel.

Selon une autre variante de l'invention, chaque élément de relief allongé comprend en outre une découpure d'orientation générale circonférentielle, cette découpure étant formée d'une incision prolongée dans l'épaisseur par un canal destiné à former une nouvelle rainure circonférentielle après une usure partielle rainure au tard avant totale disparition des rainures secondaires obliques.

Avantageusement, chaque élément de relief allongé a des petits côtés ayant une longueur comprise entre 50 et 60 mm (millimètres).

L'angle moyen A d'inclinaison des rainures obliques et des découpures additionnelles obliques exprimé en degrés est choisi pour satisfaire l'inégalité suivante :

$$A \geq \arctan\left(\frac{1}{n} \times \frac{D}{WL \times N}\right) \times \frac{180}{\pi}$$

Où :

- D est la longueur parcourue par un tour complet du pneu mesuré en roulage sous ses conditions d'usage (pression et charge) ;

- WL est la largeur axiale des parties latérales (cette largeur axiale est égale à la longueur projetée sur la direction axiale des longueurs des arêtes d'attaque des éléments de relief obliques) ;

- N est le nombre de rainures secondaires obliques au tour de roue ;

- n est l'harmonique du bruit à réduire ou à supprimer (n prend les valeurs 1, 2,3, ...).

D'autres caractéristiques et avantages de l'invention ressortent de la description faite ci-après en référence aux dessins annexés qui montrent, à titre d'exemples non limitatifs, des formes de réalisation de l'objet de l'invention.

*BRÈVE DESCRIPTION DES FIGURES*

Les figures 1 et 2 montrent respectivement une représentation temporelle et une représentation fréquentielle d'un signal correspondant au bruit émis par un motif répétitif d'une bande de roulement d'un pneu poids lourd en roulage ;

La figure 3 montre une vue partielle d'une bande de roulement d'un pneu de poids lourd selon l'invention ;

La figure 4 montre une vue en coupe transversale de la bande de roulement montrée avec la figure 3 selon un plan de coupe dont la trace est montrée avec la ligne III-III sur la figure 3 ;

La figure 5 montre une vue en coupe transversale de la bande de roulement montrée avec la figure 3 selon un plan de coupe dont la trace est montrée avec la ligne IV-IV sur la figure 3.

*DESCRIPTION DES FIGURES*

Pour rendre plus aisée la lecture des figures, des signes de référence identiques sont employés pour la description de variantes de l'invention dès lors que ces signes de référence renvoient à des éléments d'une même nature, que cette nature soit structurelle ou bien fonctionnelle.

La figure 1 montre une représentation schématique temporelle et la figure 2 montre une représentation fréquentielle du signal acoustique correspondant au bruit émis par un motif répétitif d'une bande de roulement d'un pneu de véhicule poids lourd en roulage. De manière simplifiée, les mécanismes mis en jeu lors de l'entrée dans le contact du bord d'attaque d'un élément de la bande de roulement et le temps pendant lequel ce contact se produit peuvent être représentés par un spectre d'une impulsion rectangulaire unique de période **T** et de largeur de créneau ou durée **aT.** Le spectre des fréquences comprend des raies d'émission aux fréquences Qf, ou Q prend les valeurs entières 1, 2, 3, ... et dont l'amplitude évolue avec la fréquence f comme une fonction de type $\frac{\sin\theta}{\theta}$ .

L'enveloppe de ce spectre passe par zéro aux fréquences multiples de l'inverse de la largeur des créneaux $\frac{1}{aT}$ , $\frac{2}{aT}$ , ...

En augmentant le temps de l'impulsion aT, il est possible de diminuer la fréquence du signal d'amortissement, et minimiser ainsi les fréquences qui lui sont supérieures. Cette augmentation du temps d'impulsion est obtenue grâce à la sculpture selon l'invention qui est décrite avec le support des figures 2 et suivantes.

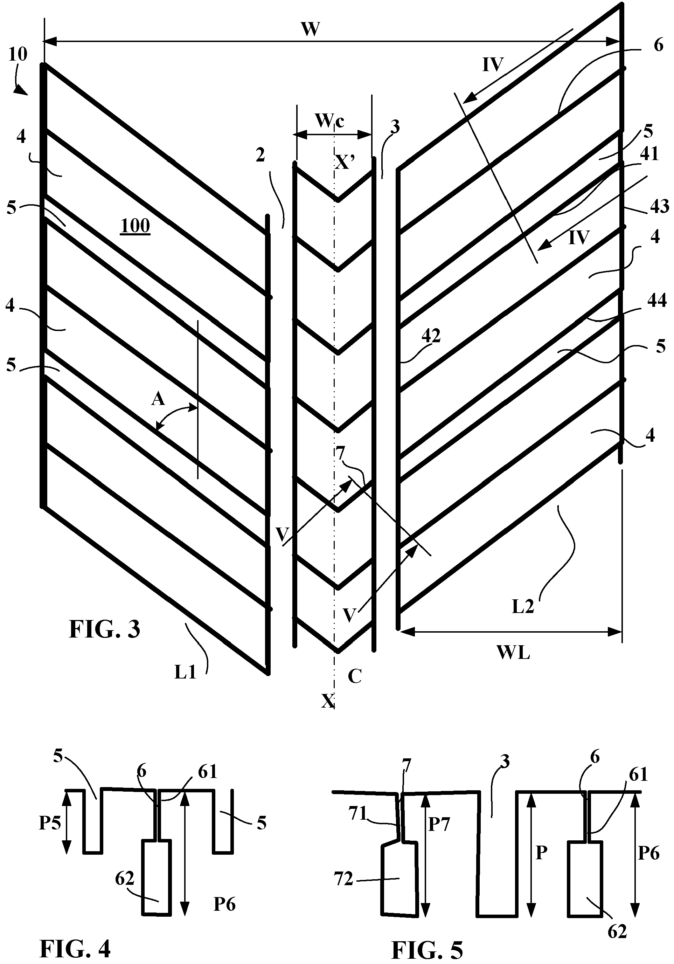

La figure 3 montre une vue partielle d'une surface externe d'un exemple de bande de roulement 10 pour pneu de poids lourd selon l'invention, ce pneu étant de dimension 315/70 R 22.5.

Cette bande de roulement 10 comporte une surface de roulement 100 et un dessin de sculpture déterminé pour permettre d'atteindre un niveau optimal de performance en roulage sur chaussée revêtue d'eau tout en réduisant de manière sensible le bruit émis en roulage. La surface de roulement est formée par les faces de contact du dessin de sculpture destinées à venir en contact avec une chaussée en roulage.

Cette bande comprend deux rainures principales d'orientation générale circonférentielle 2, 3 délimitant une partie centrale C s'étendant de part et d'autre du plan médian équatorial (plan divisant en deux moitiés égales le pneu pourvu de ladite bande). La partie centrale a une largeur axiale Wc égale dans le cas présent à 46 mm. Ce plan médian équatorial est indiqué par sa trace sur le plan de la figure 2 par la ligne XX'.

Les rainures principales circonférentielles 2, 3 ont une largeur moyenne égale à 5 mm et une profondeur égale à 14 mm (cette profondeur correspondant à l'épaisseur de matière à user, avant de devoir changer le pneu ou renouveler sa bande de roulement par rechapage). La largeur de la partie centrale C est, dans le cas présenté, égale à 18% (la largeur W de la bande est égale à 254 mm pour la dimension choisie).

La bande comprend des régions latérales L1, L2 situées de part et d'autre de la région centrale C, chacune de ces régions latérales étant divisée en une pluralité d'éléments de relief allongés 4 comprenant des grands côtés 41, 42 et des petits côtés 43, 44, ces éléments de relief allongés 4 étant délimités par des rainures secondaires obliques 5 s'ouvrant dans les rainures principales circonférentielles 2, 3 et inclinées selon un angle moyen A égal dans le cas présent à 45 degrés - cet angle étant mesuré par rapport à la direction circonférentielle parallèle à la ligne XX'. Ainsi les grands côtés 41, 42 des éléments obliques sont inclinés de 45 degrés par rapport à la direction circonférentielle.

Cet angle A est déterminé de façon à satisfaire l'inégalité suivante :

$$A \geq \arctan\left(\frac{1}{n} \times \frac{D}{WL \times N}\right) \times \frac{180}{\pi}$$

Où :

- D = 3152 mm. D est la longueur parcourue en un tour complet du pneu de dimension 315/70 R 22.5 mesurée en roulage en appliquant au pneu ses conditions d'usage de pression et de charge telles que définies dans les standards E.R.T.O.

- WL = 100 mm. WL est égale à la largeur axiale des parties latérales,

- N est le nombre de rainures secondaires obliques au tour de roue, dans le cas présent ce nombre est égal à 48.

- n est l'harmonique du bruit à réduire ou à supprimer ; dans le cas présent n = 1

Par le calcul, l'angle A doit être plus grand que 33.3 degrés.

Les rainures secondaires obliques 5 délimitant les éléments de relief allongés 4 ont une profondeur égale dans le cas présent à 55% de la profondeur des rainures principales circonférentielles 2, 3.

En outre et sur chaque élément de relief allongé 4 des régions latérales il est formé une découpure additionnelle oblique 6 s'étendant parallèlement aux rainures secondaires obliques 5 délimitant cet élément de relief allongé et divisant l'élément en deux moitiés allongées d'élément, chaque découpure additionnelle 6 oblique s'ouvrant sur les petits côtés 43, 44 de l'élément de relief 4. Cette découpure additionnelle oblique 6 a une profondeur totale égale à la profondeur des rainures principales circonférentielles et est constituée - en allant de la surface de roulement à neuf vers l'intérieur de la bande - par une incision 61 de largeur faible (c'est à dire permettant un contact entre les faces de matière en vis-à-vis lors du passage dans le contact avec une chaussée), cette incision 61 étant prolongée par un canal 62 interne destiné à former une nouvelle rainure après usure partielle de la bande de roulement égale à 45% de la profondeur P des rainures principales circonférentielles 2, 3.

Ce canal interne 62 a une largeur moyenne au moins égale à la largeur moyenne des rainures secondaires obliques 5, chaque rainure secondaire oblique 5 et chaque découpure additionnelle 6 oblique d'un élément de relief allongé se prolonge transversalement dans la région centrale de la bande par une découpure oblique 7 constituée en partant de la surface de roulement d'une incision 71 prolongée dans l'épaisseur de la bande par un canal interne 72, cette découpure oblique 7 formée dans la région centrale C conservant la même orientation que les rainures secondaires obliques 5 des régions latérales et cela jusqu'au plan médian XX'. Dimensionnellement ces découpures 7 sont identiques aux découpures 6 formées sur les parties latérales.

La figure 4 montre une coupe dans un plan dont la trace sur la figure 2 est indiquée par la ligne IV-IV. Sur cette coupe, on voit un élément allongé 4 délimité par deux rainures secondaires obliques 5 de même profondeur P5, cet élément allongé 4 étant coupé en deux par une découpure 6 formée par une incision 61 s'ouvrant sur la surface de roulement 100 prolongée par un canal ayant une largeur égale à la largeur des rainures secondaires. Le canal 62 s'ouvre pour former une nouvelle rainure à partir d'une usure partielle égale à 55% de la profondeur P des rainures principales circonférentielles. La profondeur totale P6 de la découpure 6 est égale dans la variante décrite à la profondeur P des rainures principales circonférentielles.

La figure 5 montre une coupe dans un plan dont la trace sur la figure 2 est indiquée par la ligne V-V. Sur cette coupe, on voit la partie centrale C pourvue d'une découpure 7 s'ouvrant sur la surface de roulement 100, cette découpure comportant une incision 71 prolongée par un canal 72 destiné à former une nouvelle rainure oblique après une usure partielle. On voit sur cette coupe que la découpure 7 a une profondeur P7 qui est égale à la profondeur P de la rainure principale circonférentielle 5.

Dans l'exemple décrit, le dessin de sculpture est directionnel c'est à dire qu'il impose une direction de rotation préférentielle lorsque le pneu pourvu de la bande est monté sur un véhicule poids lourd. Il est avantageux qu'à neuf les arêtes des éléments obliques allongés rentrent dans le contact par leurs points les plus proches du plan médian (tel que dessiné à la figure 2).

Dans une variante de l'invention, les éléments de relief allongés sont divisés dans la direction axiale (c'est à dire parallèle à l'axe de rotation du pneu) par une incision de largeur faible (c'est à dire permettant un contact entre les faces de matière en vis-à-vis lors du passage dans le contact avec une chaussée), cette incision s'ouvrant sur la surface de roulement à neuf et se prolongeant à l'intérieur de la bande de roulement par une partie élargie formant un canal caché. Ce canal caché, destiné à former une nouvelle rainure après une usure partielle de la bande, s'étend dans l'épaisseur de la bande jusqu'à la profondeur des rainures principales. Dans cette variante les profondeurs des rainures secondaires obliques peuvent être différentes selon qu'elle se trouve ou non proche du plan médian équatorial. De même, l'inclinaison A des arêtes d'attaque satisfaisant la relation d'inégalité telle que revendiquée peut être différenciées selon qu'elle se trouve au voisinage du plan médian ou au voisinage des bords de la bande de roulement.

L'invention n'est pas limitée aux exemples décrits et diverses modifications peuvent y être apportées sans sortir du cadre tel que défini par les revendications.

**Revendications**

1.   Bande de roulement (10) pour pneu de véhicule poids lourd, cette bande de roulement ayant à l'état neuf une surface de roulement (100) destinée à venir en contact avec une chaussée, cette bande de roulement ayant une largeur W, cette bande comprenant :

- un plan médian divisant la bande en deux moitiés d'égales largeurs,
- deux rainures principales (2, 3) d'orientation générale circonférentielle délimitant une région centrale C de largeur comprise entre 15 et 25% de la largeur totale W de la bande, ces rainures principales ayant une profondeur P définissant sensiblement l'épaisseur à user de la bande de roulement,

- des régions latérales L1, L2 de part et d'autre de la région centrale C, chacune de ces régions latérales étant divisée en une pluralité d'éléments de relief allongés (4) comprenant des grands côtés (41, 42) et des petits côtés (43, 44), ces éléments allongés (4) étant délimités par des rainures secondaires obliques (5) s'ouvrant dans les rainures principales circonférentielles (2, 3), ces rainures secondaires obliques étant inclinées selon un angle moyen A compris entre 35 degrés et 55 degrés - cet angle étant mesuré par rapport à la direction circonférentielle,

cette bande de roulement **étant caractérisée en ce que** ces rainures secondaires obliques (5) ont une profondeur P5 comprise entre 30% et 60% de la profondeur P des rainures d'orientation générale circonférentielle (2, 3), et **en ce que** chaque élément de relief allongé (4) des régions latérales L1, L2 comprend une découpure oblique (6) s'étendant parallèlement aux rainures obliques (4) délimitant cet élément de relief allongé (4) et divisant cet élément en deux moitiés d'élément allongées, chaque découpure oblique (6) s'ouvrant sur les petits côtés (43, 44) de l'élément, et chaque découpure oblique (6) a une profondeur totale P6 au moins égale à 75% de la profondeur des rainures principales circonférentielles (2, 3) et est formée - en allant de la surface de roulement à neuf vers l'intérieur de la bande - par une incision (61) prolongée d'un canal interne (62), ce canal interne (62) étant destiné à former une nouvelle rainure après usure partielle de la bande de roulement au tard avant totale disparition des rainures secondaires obliques (5), ce canal interne (62) ayant une largeur moyenne au moins égale à la largeur moyenne des rainures secondaires obliques (5), chaque rainure secondaire oblique (5) et chaque découpure oblique (6) d'un élément de relief allongé (4) se prolongeant dans la région centrale C de la bande par une découpure additionnelle (7) formée d'une incision (71) se prolongeant dans l'épaisseur de la bande par un canal interne (72), cette découpure additionnelle (7) formée dans la région centrale C conservant la même orientation que les rainures obliques (5) de chaque région latérale L1, L2 et cela jusqu'au plan médian équatorial.

2.   Bande de roulement selon la revendication 1 **caractérisée en ce que** les rainures obliques (5) d'une région latérale L1 de la bande sont déphasées circonférentiellement par rapport aux rainures obliques (5) de l'autre région latérale L2.

3.   Bande de roulement selon la revendication 1 ou la revendication 2 **caractérisée en ce que** les rainures obliques (5) des parties latérales L1, L2 sont orientées de manière à générer un dessin directionnel.

4. Bande de roulement selon l'une des revendications 1 à 3 **caractérisée en ce que** chaque élément de relief allongé (4) comprend en outre une découpure d'orientation générale circonférentielle, cette découpure étant formée d'une incision prolongée dans l'épaisseur par un canal destiné à former une nouvelle rainure au tard avant totale disparition des rainures secondaires obliques (5).

5. Bande de roulement selon l'une des revendication 1 à 4 **caractérisée en ce que** chaque élément de relief allongé (4) a des petits côtés (43, 44) de longueur comprise entre 50 et 60 mm.

6. Bande de roulement selon l'une des revendication 1 à 5 **caractérisée en ce que** l'inégalité suivante est satisfaite :

$$A \geq \arctan\left(\frac{1}{n} \times \frac{D}{WL \times N}\right) \times \frac{180}{\pi}$$

où A est l'angle moyen d'inclinaison des rainures obliques et des découpures obliques (5) exprimé en degrés,
D est la longueur parcourue par un tour complet du pneu mesuré en roulage sous ses conditions d'usage,
WL la largeur axiale des parties latérales L1, L2,
N le nombre de rainures obliques au tour de roue et
n l'harmonique du bruit à supprimer.

**Patentansprüche**

1. Laufstreifen (10) für einen Schwerlastfahrzeugreifen, wobei dieser Laufstreifen im Neuzustand eine Lauffläche (100) aufweist, die dazu bestimmt ist, mit einer Fahrbahn in Kontakt zu kommen, wobei dieser Laufstreifen eine Breite W aufweist, wobei dieser Laufstreifen umfasst:

- eine Mittelebene, die den Laufstreifen in zwei Hälften von gleicher Breite teilt,
- zwei im Wesentlichen in Umfangsrichtung verlaufende Hauptrillen (2, 3), die einen mittleren Bereich C mit einer Breite zwischen 15 und 25 % der Gesamtbreite W des Laufstreifens begrenzen, wobei diese Hauptrillen eine Tiefe P aufweisen, die im Wesentlichen die abzunutzende Dicke des Laufstreifens definiert,
- seitliche Bereiche L1, L2 beiderseits des mittleren Bereichs C, wobei jeder dieser seitlichen Bereiche in eine Vielzahl lang gestreckter Profilelemente (4) aufgeteilt ist, die große Seiten (41, 42) und kleine Seiten (43, 44) umfassen, wobei diese lang gestreckten Elemente (4) von schrägen Nebenrillen (5) begrenzt werden, die sich in die in Umfangsrichtung verlaufenden Hauptrillen (2, 3) öffnen, wobei diese schrägen Nebenrillen in einem mittleren Winkel A zwischen 35 Grad und 55 Grad geneigt sind, wobei der Winkel bezüglich der Umfangsrichtung gemessen wird,

wobei dieser Laufstreifen **dadurch gekennzeichnet ist, dass** diese schrägen Nebenrillen (5) eine Tiefe P5 zwischen 30 % und 60 % der Tiefe P der im Wesentlichen in Umfangsrichtung verlaufenden Rillen (2, 3) aufweisen, und dadurch, dass jedes lang gestreckte Profilelement (4) der seitlichen Bereiche L1, L2 einen schrägen Ausschnitt (6) umfasst, der sich parallel zu den schrägen Rillen (4) erstreckt, die dieses lang gestreckte Profilelement (4) begrenzen, und der dieses Element in zwei lang gestreckte Elementhälften aufteilt, wobei sich jeder schräge Ausschnitt (6) auf den kleinen Seiten (43, 44) des Elements öffnet, und
wobei jeder schräge Ausschnitt (6) eine Gesamttiefe P6 aufweist, die mindestens gleich 75 % der Tiefe der in Umfangsrichtung verlaufenden Hauptrillen (2, 3) ist und - von der Lauffläche im Neuzustand zum Inneren des Laufstreifens hin betrachtet - von einem Einschnitt (61) gebildet wird, der durch einen inneren Kanal (62) verlängert wird, wobei dieser innere Kanal (62) dazu bestimmt ist, nach teilweiser Abnutzung des Laufstreifens, spätestens vor dem vollständigen Verschwinden der schrägen Nebenrillen (5), eine neue Rille zu bilden, wobei dieser innere Kanal (62) eine mittlere Breite aufweist, die mindestens gleich der mittleren Breite der schrägen Nebenrillen (5) ist, wobei jede schräge Nebenrille (5) und jeder schräge Ausschnitt (6) eines lang gestreckten Profilelements (4) im mittleren Bereich C des Laufstreifens durch einen zusätzlichen Ausschnitt (7) verlängert wird, der von einem Einschnitt (71) gebildet wird, der sich durch einen inneren Kanal (72) in die Dicke des Laufstreifens verlängert, wobei dieser im mittleren Bereich C ausgebildete zusätzliche Ausschnitt (7) dieselbe Ausrichtung beibehält, wie die schrägen Rillen (5) jedes seitlichen Bereichs L1, L2, und zwar bis zur äquatorialen Mittelebene.

2. Laufstreifen nach Anspruch 1, **dadurch gekennzeichnet, dass** die schrägen Rillen (5) eines seitlichen Bereichs L1 des Laufstreifens bezüglich der schrägen Rillen (5) des anderen seitlichen Bereichs L2 in Umfangsrichtung versetzt sind.

3. Laufstreifen nach Anspruch 1 oder Anspruch 2, **dadurch gekennzeichnet, dass** die schrägen Rillen (5) der seitlichen Teile L1, L2 so ausgerichtet sind, dass sie ein laufrichtungsgebundenes Profil bilden.

**4.** Laufstreifen nach einem der Ansprüche 1 bis 3, **dadurch gekennzeichnet, dass** jedes lang gestreckte Profilelement (4) außerdem einen im Wesentlichen in Umfangsrichtung ausgerichteten Ausschnitt umfasst, wobei dieser Ausschnitt von einem Einschnitt gebildet wird, der durch einen Kanal in die Dicke verlängert wird, der dazu bestimmt ist, spätestens vor dem vollständigen Verschwinden der schrägen Nebenrillen (5) eine neue Rille zu bilden.

**5.** Laufstreifen nach einem der Ansprüche 1 bis 4, **dadurch gekennzeichnet, dass** jedes lang gestreckte Profilelement (4) kleine Seiten (43, 44) mit einer Länge zwischen 50 und 60 mm aufweist.

**6.** Laufstreifen nach einem der Ansprüche 1 bis 5, **dadurch gekennzeichnet, dass** die folgende Ungleichung erfüllt ist:

$$A \geq \arctan\left(\frac{1}{n} \times \frac{D}{WL \times N}\right) \times \frac{180}{\pi} \text{ ,}$$

wobei A der mittlere Neigungswinkel der schrägen Rillen und der schrägen Ausschnitte (5) ist, ausgedrückt in Grad,

D die Länge ist, die bei einer vollständigen Umdrehung des Reifens zurückgelegt wird, gemessen während der Fahrt unter seine Verwendungsbedingungen,

WL die axiale Breite der seitlichen Teile L1, L2 ist,

N die Anzahl schräger Rillen bei einer Radumdrehung ist und

n die Harmonische des zu unterdrückenden Geräusches ist.

**Claims**

**1.** Tread (10) for a heavy vehicle tyre, this tread having, when new, a tread surface (100) intended to come into contact with a roadway, this tread having a width W, this tread comprising:

- a mid-plane that divides the tread into two halves of equal width,
- two main grooves (2, 3) of circumferential overall orientation delimiting a central region C of a width comprised between 15 and 25% of the total width W of the tread, these main grooves having a depth P substantially defining the wearable thickness of the tread,
- lateral regions L1, L2 on each side of the central region C, each of these lateral regions being divided into a plurality of elongate raised elements (4) comprising long sides (41, 42) and short sides (43, 44), these elongate elements (4) being delimited by oblique secondary grooves (5) opening into the circumferential main grooves (2, 3), these oblique secondary grooves being inclined by a mean angle A of between 35 degrees and 55 degrees - this angle being measured with respect to the circumferential direction,

this tread **being characterized in that** these oblique secondary grooves (5) have a depth P5 comprised between 30% and 60% of the depth P of the grooves of circumferential overall orientation (2, 3), and **in that** each elongate raised element (4) of the lateral regions L1, L2 comprises an oblique cut (6) running parallel to the oblique grooves (4) delimiting this elongate raised element (4) and dividing this element into two elongate element halves, each oblique cut (6) opening onto the short sides (43, 44) of the element, and

each oblique cut (6) has a total depth P6 at least equal to 75% of the depth of the circumferential main grooves (2, 3 and is formed - progressing from the surface of the tread when the tyre is new toward the inside of the tread - by a sipe (61) extended by an internal canal (62), this internal canal (62) being intended to form a new groove once the tread is partially worn at the latest before the oblique secondary grooves (5) completely disappear, this internal canal (62) having a mean width at least equal to the mean width of the oblique secondary grooves (5), each oblique secondary groove (5) and each oblique cut (6) of an elongate raised element (4) being extended in the central region C of the tread by an additional cut (7) formed of a sipe (71) extending into the thickness of the tread in the form of an internal canal (72), this additional cut (7) formed in the central region C maintaining the same orientation as the oblique grooves (5) of each lateral region L1, L2 and doing so as far as the equatorial mid-plane.

**2.** Tread according to Claim 1, **characterized in that** the oblique grooves (5) of one lateral region L1 of the tread are offset circumferentially with respect to the oblique grooves (5) of the other lateral region L2.

**3.** Tread according to Claim 1 or Claim 2, **characterized in that** the oblique grooves (5) of the lateral parts L1, L2 are oriented so as to create a directional pattern.

**4.** Tread according to one of Claims 1 to 3, **characterized in that** each elongate raised element (4) further comprises a cut of circumferential overall orientation, this cut being formed of a sipe extended into the thickness by a canal intended to form a new groove at the latest before the oblique secondary grooves (5) completely disappear.

5. Tread according to one of Claims 1 to 4, **characterized in that** each elongate raised element has short sides (43, 44) of a length comprised between 50 and 60 mm.

6. Tread according to one of Claims 1 to 5, **characterized in that** the following inequality is satisfied:

$$A \geq \arctan\left(\frac{1}{n} \times \frac{D}{WL \times N}\right) \times \frac{180}{\pi}$$

in which A is the mean angle of inclination of the oblique grooves (5) and of the oblique cuts, expressed in degrees, D is the length travelled by a complete revolution of the tyre, measured during the running under its conditions of use, WL is the axial width of the lateral parts L1, L2, N is the number of oblique grooves in one revolution of the wheel, and n is the harmonic of the noise that is to be eliminated.

**FIG 1**

**FIG 2**

**FIG. 3**

**FIG. 4**

**FIG. 5**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- FR 3014022 A1
- EP 1935671 A2